# EUROPÄISCHE PATENTANMELDUNG

(11) **EP 4 614 958 A1**
(43) Veröffentlichungstag der Anmeldung: **10.09.2025**
(21) Anmeldenummer: 25158636.8
(22) Anmeldetag: 18.02.2025
(51) Int. Cl.: H04N 1/60, H04N 1/62, H04N 23/88, H04N 9/73

(54) **VERFAHREN, VORRICHTUNG UND SYSTEM ZUM ÜBERPRÜFEN EINES VOREINGESTELLTEN WEISSABGLEICHS VON MINDESTENS EINEM GESICHTSBILD, UND EIN ENTSPRECHENDES COMPUTERPROGRAMMPRODUKT**

(30) Priorität: 04.03.2024 DE 102024106135
(71) Anmelder: Bundesdruckerei GmbH, 10969 Berlin (DE)
(72) Erfinder: PETERS, Dr. Florian, Berlin (DE); SAUER, Tatjana, Berlin (DE); SZEGVARI, Dr. Piotr, Potsdam (DE)
(74) Vertreter: Bittner, Thomas L.

(57) **Zusammenfassung**

Computer-implementiertes Verfahren zum Überprüfen eines voreingestellten Weißabgleichs von mindestens einem Gesichtsbild, das Verfahren umfassend: Ermitteln eines Hautgesichtsbereichsfarbwerts für einen Hautgesichtsbereich des mindestens einen Gesichtsbilds mit voreingestelltem Weißabgleich; Bestimmen von Farbunterschiedswerten des Hautgesichtsbereichsfarbwerts zu Hauttonwerten in einer Hauttontabelle; und Überprüfen des voreingestellten Weißabgleichs des mindestens einen Gesichtsbilds anhand eines minimalen Farbunterschiedswerts, wobei das Überprüfen umfasst: Ausgeben eines Hinweises einen Weißabgleich manuell durchzuführen, wenn der minimale Farbunterschiedswert einen ersten vorgegebenen Farbunterschiedsgrenzwert überschreitet, oder Anpassen des Weißabgleichs auf Basis eines systematischen Farbfehlerwerts wenn der minimale Farbunterschiedswert den ersten vorgegebenen Farbunterschiedswert unterschreitet, oder Ausgeben eines Bilddatensatzes auf Basis des mindestens einen Bilds, wenn der minimale Farbunterschiedswert einen zweiten vorgegebenen Farbunterschiedsgrenzwert unterschreitet oder diesem entspricht.

## Beschreibung

Die Erfindung betrifft ein Verfahren, eine Vorrichtung und ein System zum Überprüfen eines voreingestellten Weißabgleichs von mindestens einem Gesichtsbild, und ein entsprechendes Computerprogrammprodukt.

### Hintergrund

Gesichtsbilder werden zur Authentifizierung einer Person für Sicherheitsdokuments, beispielsweise als Passbilder oder in Ausweisdokumenten verwendet. Insbesondere werden Gesichtsbilder als biometrische Daten in elektronischen Pässen hinterlegt. In einem solchen Gesichtsbild muss das darin enthaltene Gesicht bestimmten vorgegebenen Anforderungen genügen. Insbesondere werden bei Verwendung eines solchen Gesichtsbilds zur Authentifikation oder zur Verwendung in einem Ausweisdokument hohe Anforderungen an die Farbwiedergabe, insbesondere der Hauttöne, der Helligkeit sowie der Mimik und Haltung gestellt.

Ferner dürfen solche Gesichtsbilder nicht oder nur in eingeschränkten Maß nachträglich modifiziert werden. So sind beispielsweise Verschönerungen des Gesichts in dem Gesichtsbild, wie etwa einen besseren Teint oder ein besseres Aussehen zu erzeugen, untersagt.

Solche Gesichtsbilder werden beispielweise durch zur Aufnahme speziell geschulter Personen, wie Fotografen oder Sachbearbeiter aufgenommen. Die Person ist für gewöhnlich geschult, zu erkennen, ob ein Gesichtsbild den gegebenen Anforderungen genügt und kann gegebenenfalls nachträglich Änderungen durchführen oder kann ein neues Gesichtsbild aufnehmen. Darüber hinaus ist durch die geschulte Person sichergestellt, dass das Gesichtsbild nicht unzulässig modifiziert wird.

In der letzten Zeit geht die Entwicklung dahin, dass sich Personen eigenständig authentifizieren können oder Gesichtsbilder für Ausweisdokumente und Passbilder eigenständig aufnehmen können. Dazu ist die Anwesenheit einer geschulten Person nicht mehr erforderlich. Allerdings muss weiterhin gewährleistet werden, dass das Gesichtsbild den vorgegebenen Anforderungen genügt und höchstens geringfügig nachträglich angepasst werden muss.

Die Aufnahme eine Gesichtsbild kann beispielsweise in einer Aufnahmeeinrichtung insbesondere sogenannten Live-Enrolment System durchgeführt werden, in dem der Nutzer eigenständig ein Bild von seinem Gesicht mittels einer Bildaufnahmeeinrichtung aufnehmen kann.

Bei der Aufnahme der Bilder werden üblicherweise mittels eines vorgegebenen Algorithmus Rohdaten eines Sensors der Bildaufnahmeeinrichtung aufbereitet. Beispielsweise werden Farbeinstellungen getroffen und der Weißabgleich für das aufgenommene Bild gesetzt.

Zur Aufnahme der Bilder wird in einem solchen System eine ausgeglichene Beleuchtung verwendet, beispielsweise ein sogenanntes d65 Licht, mit vorgegebener Wellenlänge und vorgegebener Beleuchtungsstärke. Der vorgegebene Algorithmus zur Festlegung der Farbwiedergabe ist auf diese Beleuchtung abgestimmt. Damit kann eine möglichst realistische Wiedergabe der Farbwerte realisiert werden.

In der Praxis hat es sich allerdings gezeigt, dass die so aufgenommenen Gesichtsbilder häufig eine zumindest geringfügig ungenaue oder unrealistische Wiedergabe der Farben des Gesichts aufweisen und somit nicht den Anforderungen zur Verwendung in einem Sicherheitsdokument oder zur Authentifizierung genügen.

Dadurch können Qualitätsprobleme bei der Verwendung der Bilder von dem Gesicht einer Person für die Authentifizierung oder Hinterlegung in einem Sicherheitsdokument auftreten.

### Zusammenfassung

Vor diesem Hintergrund ist es eine Aufgabe der Erfindung, verbesserte Technologien für ein Gesichtsbilds bereitzustellen, welches die Anforderungen zur Verwendung in einem Sicherheitsdokument oder zur Authentifikation erfüllt.

Zur Lösung der Aufgabe ist Computer-implementiertes Verfahren zum Überprüfen eines voreingestellten Weißabgleichs von mindestens einem Gesichtsbild nach dem unabhängigen Anspruch 1 bereitgestellt. Weiterhin wird zur Lösung der Aufgabe eine Vorrichtung und ein System zum Überprüfen eines voreingestellten Weißabgleichs von mindestens einem Gesichtsbild sowie ein entsprechendes Computerprogrammprodukt bereitgestellt.

Das erfindungsgemäße Computer-implementierte Verfahren zum Überprüfen eines voreingestellten Weißabgleichs von mindestens einem Gesichtsbild umfasst: Ermitteln eines Hautgesichtsbereichsfarbwerts für einen Hautgesichtsbereich des mindestens einen Gesichtsbilds mit voreingestelltem Weißabgleich; Bestimmen von Farbunterschiedswerten des Hautgesichtsbereichsfarbwerts zu Hauttonwerten in einer Hauttontabelle; und Überprüfen des voreingestellten Weißabgleichs des mindestens einen Gesichtsbilds anhand eines minimalen Farbunterschiedswerts, wobei das Überprüfen umfasst: Ausgeben eines Hinweises einen Weißabgleich manuell durchzuführen, wenn der minimale Farbunterschiedswert einen ersten vorgegebenen Farbunterschiedsgrenzwert überschreitet, oder Anpassen des Weißabgleichs auf Basis eines systematischen Farbfehlerwerts, wenn der minimale Farbunterschiedswert den ersten vorgegebenen Farbunterschiedswert unterschreitet, oder Ausgeben eines Bilddatensatzes auf Basis des mindestens einen Bilds, wenn der minimale Farbunterschiedswert einen zweiten vorgegebenen Farbunterschiedsgrenzwert unterschreitet.

Das erfindungsgemäße Verfahren geht auf die Erkenntnis der Erfinder zurück, dass der Weißabgleich die Farbwiedergabe maßgeblich beeinflusst und dessen Festlegung durch umgebendes Streulicht verfälscht werden kann. Zwar wird der Weißabgleich bei der Anwendung in Life-Enrolment-Systemen maßgeblich durch die verwendete Beleuchtung, wie etwa des d65-Lichts, des Gesichts in dem Gesichtsbild bestimmt, jedoch kann es in der Praxis dazu kommen, dass das Gesicht Licht aus anderen Lichtquellen, wie etwa Sonnenlicht oder von umgebende Leuchten, reflektiert und so die Festlegung des Weißabgleichs verfälscht wird. Da der Weißabgleich in dem Gesichtsbild eine Auswirkung auf die Wiedergabe der Farbwerte insbesondere der Hauttöne hat, wird so die Wiedergabe der Hautfarbwerte verfälscht, was zu Qualitätsproblemen bei der Verwendung des Gesichtsbilds für die Authentifikation oder für ein Sicherheitsdokument führt.

Gemäß des erfindungsgemäßen Verfahrens kann mindestens ein Gesichtsbild empfangen werden. Das mindestens eine Gesichtsbild kann beispielsweise von einer Bildaufnahmeeinrichtung empfangen werden. Bei der Aufnahme oder anschließend wird ein voreingestellter Weißabgleich für das mindestens eine Gesichtsbild angewandt. Der voreingestellte Weißabgleich ist üblicherweise auf die vorgegebene Beleuchtung des Gesichts abgestimmt.

Ein Gesichtsbild ist ein Bild in dem das Gesicht einer Person, vorzugsweise komplett, abgebildet ist. In dem mindestens einen Gesichtsbild kann durch einen trainierten Algorithmus das Gesicht ermittelt werden. In dem so ermittelten Gesicht kann über vorgegebene Landmarks, beispielsweise die Augen oder die Nase, ein Hautgesichtsbereich ermittelt werden. Ein Hautgesichtsbereich ist ein Bereich des Gesichts mit einer Hautoberfläche, beispielsweise die Stirn oder die Wangen. Ein Hautgesichtsbereich kann ausschließlich eine Hautoberfläche in dem Gesicht aufweisen. Trainierte Algorithmen zur Bestimmung des Gesichts und zur Bestimmung der Hautgesichtsbereiche sind bekannt. Solche Algorithmen werden mit einer Vielzahl von Beispielbildern von den Gesichtern unterschiedlicher Personen angelernt, sodass damit zuverlässig ein Gesicht und ein Hautgesichtsbereich ermittelt werden können.

Für einen Hautgesichtsbereich wird ein Hautgesichtsbereichsfarbwert bestimmt. Der Hautgesichtsbereichsfarbwert gibt einen repräsentativen Farbwert für die Haut des Gesichts in dem entsprechenden Gesichtsbild an.

Der ermittelte Haugesichtsbereichsfarbwert wird mit Hauttonwerten in einer Hauttontabelle verglichen. In einer Hauttontabelle sind Farbwerte für Hauttöne von verschiedenen Personen gelistet. Eine solche Hauttontabelle kann beispielsweise Farbwerte der Haut von vielen Personen auch unterschiedlichen Ethnien umfassen. Ein Beispiel für eine Hautontabelle ist gegeben in "Development and validation of a new Skin Color Chart", Skin Research and Technology 2007; 13: 101-109, Jean de Rigal et al.

Für den ermittelten Hautgesichtsbereichsfarbwert wird ein Hauttonwert in der Hauttontabelle bestimmt, der dem ermittelten Haugesichtsfarbwert am ähnlichsten ist oder diesem entspricht. Dazu wird für den ermittelten Haugesichtsfarbwert ein Farbunterschiedswert zu jedem der Hautwerte in der Hauttontabelle bestimmt. Ein Farbunterschiedswert kann beispielsweise gebildet werden durch eine Differenz des Hautgesichtsfarbwerts und einem Hauttonwert in der Hauttontabelle.

Aus den ermittelten Farbunterschiedswerten wird ein minimaler Farbunterschiedswert bestimmt. Der minimale Farbunterschiedswert ist aus allen ermittelten Farbunterschiedswerten der geringste Wert. Somit kann ein Hauttonwert in der Hauttontabelle bestimmt werden, der eine geringsten Farbunterschiedswert zu dem ermittelten Hautgesichtsfarbwert des Hautgesichtsbereichs in dem jeweiligen mindestens einen Gesichtsbild aufweist, d.h. in der Hauttontabelle wird der Hauttonwert bestimmt, welcher dem ermittelten Hautgesichtsbereichsfarbwert am ähnlichsten ist oder diesem entspricht.

Anhand des minimalen Farbunterschiedswert kann der voreingestellte Weißabgleich auf Plausibilität überprüft werden. Somit kann überprüft werden, ob der voreingestellte Weißabgleich und der damit verknüpfte Hauttonwert den Anforderungen zur Anwendung in einem Sicherheitsdokument zumindest in vorgegebenen zulässigen Fehlergrenzen genügt.

Dadurch wird durch das erfindungsgemäße Verfahren eine Möglichkeit geschaffen, den vorgestellten Weißabgleich auf Plausibilität zu überprüfen.

Das Überprüfen umfasst das Ausgeben eines Hinweises, das Anpassen des Weißabgleichs oder das Ausgeben eines Bilddatensatzes. Jede der genannten Optionen ist abhängig oder unabhängig von den jeweils anderen Optionen. Der erste oder zweite Farbunterschiedsgrenzwert können manuell festgelegt werden. Der erste oder zweite Farbunterschiedsgrenzwert können unabhängig voneinander sein.

Gemäß einer ersten Option umfasst das Überprüfen: Ausgeben eines Hinweises einen Weißabgleich manuell durchzuführen, wenn der minimale Farbunterschiedswert einen ersten vorgegebenen Farbunterschiedsgrenzwert überschreitet.

Wenn somit die Abweichung des Hautgesichtsbereichsfarbwerts keine ausreichende Übereinstimmung mit einem Wert in der Hauttontabelle aufweist, kann der Farbunterschiedsgrenzwert manuell durch die Person oder ein Personal festgelegt werden. Insofern ist das Ergebnis der Überprüfung, dass der voreingestellte Weißabgleich zu unplausiblen Hautgesichtsfarbwerten führt und somit ungenau ist. Der Hinweis kann beispielsweise akustisch oder optisch ausgegeben werden. Der Hinweis kann beispielsweise eine Aufforderung enthalten den Weißabgleich über eine Referenztafel durchzuführen oder die Beleuchtungssituation anzupassen. Dadurch kann eine von der Hauttontabelle abweichende Farbwiedergabe korrigiert werden.

Gemäß einer zweiten Option umfasst das Überprüfen: Anpassen des Weißabgleichs auf Basis eines systematischen Farbfehlerwerts, wenn der minimale Farbunterschiedswert den ersten vorgegebenen Farbunterschiedswert unterschreitet.

Damit kann festgestellt werden, dass eine (geringfügige) Abweichung von den Hauttonwerten in der Hauttontabelle vorliegt. Insofern ist das Ergebnis der Überprüfung, dass der voreingestellte Weißabgleich grundsätzlich plausibel ist und lediglich geringfüge Anpassungen des Weißabgleichs zur Korrektur vorgenommen werden können. Der Weißabgleich kann dann auf Basis eines systematischen Farbfehlerwerts angepasst werden. Der systematische Farbfehlerwert kann ein systematischen Farbfehler sein, der auf eine systematische Abweichung des Weißabgleichs durch die zur Aufnahme des Gesichtsbilds verwendete Vorrichtung oder die Umgebung zurückgeht. Der systematische Farbfehlerwert kann vorab für die zur Aufnahme des Gesichtsbilds verwendete Vorrichtung oder Umgebung ermittelt worden sein oder ermittelt werden. Der systematische Farbfehlerwert ist somit charakteristisch für die zur Aufnahme der Gesichtsbilder verwendete Vorrichtung oder Umgebung.

Gemäß einer dritten Option umfasst das Überprüfen: Ausgeben eines Bilddatensatzes auf Basis des mindestens einen Gesichtsbilds, wenn der minimale Farbunterschiedswert einen zweiten vorgegebenen Farbunterschiedsgrenzwert unterschreitet oder diesem entspricht.

In weiteren Aspekten kann der Bilddatensatz auf Basis des mindestens einen Gesichtsbilds ausgegeben werden, wenn der minimale Farbunterschiedswert einem Tonwert in der Hauttontabelle entspricht.

Der zweite Farbunterschiedsgrenzwert kann vorzugsweise niedriger sein als der erste Grenzwert. Somit kann festgestellt werden, dass der voreingestellte Weißabgleich den Anforderungen für eine Sicherheitsdokument genügt. Damit kann festgestellt werden, dass eine weitere Anpassung des Weißabgleichs nicht notwendig ist. Das mindestens eine Bild kann mit voreingestellten Weißabgleich in Form eines Bilddatensatzes der weiteren Verwendung in einem Sicherheitsdokument oder zur Authentifizierung zur Verfügung gestellt werden.

Abhängig von dem Überprüfen des voreingestellten Weißabgleichs kann auf ein Ergebnis des Überprüfens separat oder kumulativ reagiert werden. Damit wird durch jede Option allein oder in Kombination ein Verfahren bereitgestellt, welches eine Überprüfung des Weißabgleichs ermöglicht und basiert darauf mindestsens ein Gesichtsbild erzeugt werden kann, welches zuverlässig den Anforderungen in einem Sicherheitsdokument genügt.

Insofern wird lediglich dann eine Korrektur oder ein weiteres Handeln notwendig, wenn die Überprüfung eine signifikante Abweichung der Hautgesichtsfarbwerte von den Hauttönen in der Hauttontabelle ergibt.

Im Folgenden werden bevorzugte Aspekte des erfindungsgemäßen Verfahrens bereitgestellt.

Gemäß eines Aspekts umfasst das Verfahren: Empfangen einer Vielzahl von Gesichtsbildern mit voreingestellten Weißabgleich und unterschiedlichen Helligkeitswerten; Bestimmen, in jedem der Vielzahl von Gesichtsbildern, des Hautgesichtsbereichs; Ermitteln, in jedem der Vielzahl von Gesichtsbildern, eines Bildparameterwerts für einen Bildparameter in dem Hautgesichtsbereich; Bestimmen des mindestens einen Gesichtsbilds aus der Vielzahl von Gesichtsbildern, in dem der ermittelte Bildparameterwert innerhalb eines vorgegebenen Bildparameterwertebereichs liegt.

Die Vielzahl von Gesichtsbildern kann beispielsweise als Videostream empfangen werden. Der Videostream kann aufgenommen worden sein bei unterschiedlicher, insbesondere kontinuierlich ansteigender, Beleuchtungsintensität des Gesichts der Person.

Für jedes der Vielzahl von Gesichtsbildern mit unterschiedlicher Helligkeit kann, wie zuvor beschrieben, ein Hautgesichtsbereich ermittelt werden. Für jeden Hautgesichtsbereich wird ein Bildparameterwert eines Bildparameters bestimmt. Mindestens ein Gesichtsbild, bei dem der Bildparameterwert des Hautgesichtsbereichs innerhalb eines Bildparameterwertebereichs liegt, wird für die Ermittlung des Hautgesichtsfarbwerts und zur Ermittlung des minimalen Farbunterschiedswerts herangezogen.

Somit wird der weiteren Verarbeitung das mindestens eine Gesichtsbild zugrunde gelegt, bei dem die Ausleuchtung des Gesichts und die damit verbundene Wiedergabe der Hauttonwerte optimal ist.

Gemäß einem Aspekt ist der Bildparameter eine Helligkeit oder eine Entropie. Die Erfinder haben herausgefunden, dass diese Bildparameter sich besonders gut für eine Objektivierung der Beurteilung der Ausleuchtung eignen und damit die Bildqualität realistisch beurteilt werden kann. Ferner ist damit für die Überprüfung des Weißabgleichs die Beleuchtung festgelegt.

Gemäß einem weiteren Aspekt wird der Farbfehlerwert bestimmt wird durch: Ermitteln für Gesichtsbildern einer Vielzahl von Personen jeweils eines minimalen Farbunterschiedswerts des Hautgesichtsbereichsfarbwerts in dem entsprechenden Gesichtsbild zu den Hauttonwerten in der Hautttontabelle; Bestimmen des systematischen Farbfehlerwerts aus den minimalen Farbunterschiedswerten der Gesichtsbilder der Vielzahl von Personen.

Jede der Vielzahl von Personen weist einen unterschiedlichen Hautgesichtsbereichsfarbwert auf. Vorzugsweise kann die Vielzahl von Personen Personen unterschiedlicher Ethnien umfassen. Die Hautgesichtsbereichsfarbwerte können somit unterschiedlichen Farbwerten Hauttönen in der Hauttontabelle zugeordnet werden, für die ein Farbunterschiedswert minimal ist. Somit können Abweichungen für unterschiedliche Hauttöne in der Hauttontabelle ermittelt werden. Daraus kann ein systematischer Fehlerwert bestimmt werden, der auf die Vorrichtung, mit der die Bilder aufgenommen wurden, oder die Umgebung, in der die Gesichtsbilder aufgenommen wurden, zurückzuführen ist. Dieser systematische Farbfehlerwert kann dann zum Anpassen des Weißabgleichs herangezogen werden. Damit kann ein Weißabgleich realisiert werden, der den Anforderungen für die Verwendung des Gesichtsbilds in einem Sicherheitsdokument oder zur Authentifikation genügt.

Gemäß einem Aspekt kann der zweite Farbunterschiedsgrenzwert niedriger sein als der erste Farbunterschiedsgrenzwert.

Gemäß einem Aspekt kann der Hautgesichtsbereichsfarbwert ermittelt werden durch Bestimmen von mehreren Farbwerten in dem Hautgesichtsbereich und durch Bilden eines Mittelwerts aus den mehreren Farbwerten. Der Hautgesichtsbereichsfarbwert kann somit dem Mittelwert entsprechen. Damit ist der Hautgesichtsfarbwert repräsentativ für einen Farbwert des ermittelten Hautgesichtsbereichs des Gesichts in dem Gesichtsbild.

Gemäß einem Aspekt kann der mindestens eine Hautgesichtsbereichsfarbwert ermittelt werden durch Bestimmen von mehreren Farbwerten in dem Hautgesichtsbereich und durch Auswählen des in den bestimmten mehreren Farbwerten am häufigsten auftretenden Farbwerts. Der mindestens eine Hautgesichtsbereichsfarbwert entspricht somit dem am häufigsten in dem Hautgesichtsbereich vorkommenden Farbwert. Damit ist der Hautgesichtsfarbwert repräsentativ für einen Farbwert des ermittelten Hautgesichtsbereichs des Gesichts in dem Gesichtsbild.

Gemäß einem Aspekt kann der Hausgesichtsbereich über Landmarks des Gesichts in dem Gesichtsbild ermittelt wird. Beispielsweise wird zunächst mittels eines trainierten Algorithmus, wie etwa einer künstlichen Intelligenz, das Gesicht in einem Gesichtsbild ermittelt. Danach werden in dem Gesicht Landmarks, wie etwa die Augen oder die Nase, in dem Gesicht mittels des trainierten Algorithmus ermittelt. Anhand der Landmarks können Hautgesichtsbereiche in dem Gesicht ermittelt werden. Ein trainierter Algorithmus kann eine künstliche Intelligenz sein.

Gemäß einem Aspekt umfasst das Verfahren ferner: Ansteuern, durch den Prozessor, einer Bildaufnahmeeinrichtung und einer Beleuchtungseinrichtung, sodass die Bildaufnahmeeinrichtung eine Vielzahl von Bildern aufnimmt und die Beleuchtungseinrichtung eine Helligkeit erhöht, bis durch den Prozessor bestimmt wird, dass der Bildparameter innerhalb des vorgegebenen Bereichs liegt.

Das Verfahren kann in eine Life-Enrolment-System implementiert werden, wobei durch dein Computer die Aufnahme der Gesichtsbilder und die Verarbeitung der aufgenommenen Gesichtsbilder gesteuert wird.

Weiterhin kann ein Verfahren zum Personalisieren eines Sicherheitsdokuments geschaffen sein, wobei das Verfahren ferner umfasst: Übermitteln des Bilddatensatzes an eine Personalisierungseinrichtung, Drucken mittels der Personalisierungseinrichtung des Gesichtsbilds des Bilddatensatzes auf ein Sicherheitsdokument oder Speichern mittels der Personalisierungseinrichtung des Bilddatensatzes in einer Speichereinrichtung des Sicherheitsdokuments.

Weiterhin kann ein Verfahren zur Authentifizierung des Nutzers geschaffen sein, das Verfahren umfassend: Senden des Bilddatensatzes an einen Server über das Internet zur Authentifikation.

Weiterhin wird die eingangs genannte Aufgabe gelöst durch eine Vorrichtung, insbesondere ein Computer, eingerichtet und ausgelegt, das erfindungsgemäße Verfahren durchzuführen. Eine solche Vorrichtung kann beispielsweise in ein Life-Enrolment-System integriert sein.

Ferner wird die eingangs genannte Aufgabe gelöst durch ein Computerprogrammprodukt umfassend Befehle, die bei der Ausführung durch eine Datenverarbeitungsvorrichtung, insbesondere der angesprochenen Vorrichtung, diese veranlassen, die Verfahrensschritte nach den erfindungsgemäßen Verfahren auszuführen.

Darüber hinaus wird die eingangs genannte Aufgabe gelöst durch ein System zum Überprüfen eines voreingestellten Weißabgleichs mindestens eines Gesichtsbilds, das System umfassend: die erwähnte Vorrichtung; Eine mit der Vorrichtung verbundene Bildaufnahmeeinrichtung eingerichtet mindestens ein Gesichtsbild aufzunehmen.

Durch eine solches System kann ein Life-Enrolment-System geschaffen sein, in dem sich eine Person selbständig Authentifizieren kann oder ein Bild von ihrem Gesicht für ein Sicherheitsdokument aufzunehmen.

In einem Aspekt weist das System auf eine mit der Vorrichtung verbundene Beleuchtungseinrichtung, wobei die Bildaufnahmeeinrichtung und die Beleuchtungseinrichtung eingerichtet sind, eine Vielzahl von Gesichtsbildern aufzunehmen, während die Helligkeit durch die Beleuchtungseinrichtung erhöht wird.

### Beschreibung von Ausführungsbeispielen

Im Folgenden werden weitere Ausführungsbeispiele unter Bezugnahme auf Figuren einer Zeichnung näher erläutert. Hierbei zeigen beispielhaft:
- Fig. 1: Zeitliche Abfolge der Schritte eines Verfahrens zum Überprüfen eines voreingestellten Weißabgleichs von mindestens einem Gesichtsbild
- Fig. 2: Eine Anordnung zur Personalisierung eines Sicherheitsdokuments oder zur Authentifizierung

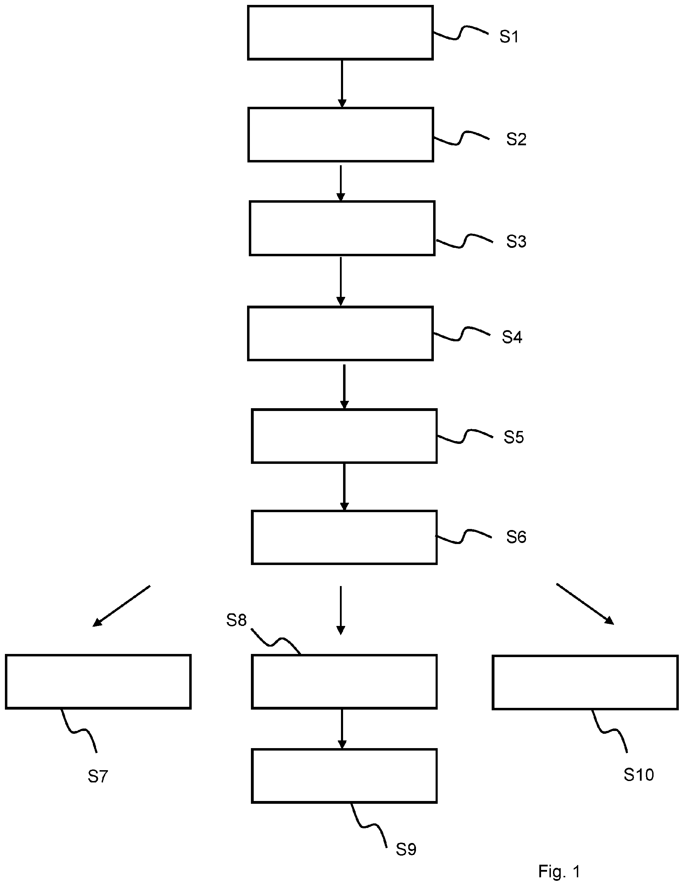

Figur 1 zeigt eine zeitliche Abfolge von Schritten eines Verfahrens zum Überprüfen eines voreingestellten Weißabgleichs von mindestens einem Gesichtsbild. Das Verfahren wird, wenn nicht anders angegeben, durch einen Computer durchgeführt.

In Schritt S1 wird mittels einer Bildaufnahmeeinrichtung, wie eine Kamera, ein Videostream mit Gesichtsbildern von dem Gesicht einer Person aufgenommen. Während der Aufnahme des Videostream wird eine Beleuchtung mittels einer Beleuchtungseinrichtung graduell erhöht. Bei der Aufnahme wird ein voreingestellter Weißabgleich entsprechend der Beleuchtung angewandt. Somit wird eine Vielzahl von Gesichtsbildern mit unterschiedlichen Helligkeitswerten erzeugt.

In Schritt S2 wird für jedes Gesichtsbild das Gesicht der Person identifiziert und anhand von Landmarks in dem ermittelten Gesicht werden Hautgesichtsbereiche, wie etwa die Stirn oder die Wangen, ermittelt. Das Ermitteln des Gesichts in einem Gesichtsbild und das Bestimmen der Hautgesichtsbereiche wird beispielsweise durch einen angelernten Algorithmus, wie eine künstliche Intelligenz, durchgeführt.

In einem Schritt S3 wird für jedes Gesichtsbild ein Bildparameterwert für einen Bildparameter, wie eine Helligkeit oder eine Entropie, in dem Hautgesichtsbereich ermittelt. Wenn der ermittelte Bildparameterwert innerhalb eines vorgegebenen Bildparameterbereichs liegt oder einem gewünschten Bildparameterwert entspricht, kann die Bildaufnahme eingestellt werden. Das bei der entsprechenden Beleuchtung ermittelte mindestens eine Gesichtsbild wird für die weitere Bearbeitung verwendet.

In einem Schritt S4 wird für den Hautgesichtsbereich des mindestens einen Gesichtsbilds ein Hautgesichtsbereichsfarbwert ermittelt. Der Hautgesichtsbereichsfarbwert kann in einem Beispiel ermittelt werden durch Bestimmen von mehreren Farbwerten in dem entsprechenden Hautgesichtsbereich und Bilden eines Mittelwerts aus den mehreren Farbwerten. In anderen Beispielen kann der Hautgesichtsbereichsfarbwert ermittelt werden durch Bestimmen von mehreren Farbwerten in dem entsprechenden Hautgesichtsbereich und durch Auswählen eines am häufigsten vorkommenden Farbwerts.

In einem Schritt S5 wird der Hautgesichtsbereichsfarbwert des Hautgesichtsbereichs des mindestens eines Gesichtsbilds mit Hauttonwerten in einer Hauttontabelle verglichen. Für jeden Hauttonwert in der Hauttontabelle wird ein Farbunterschiedswert zu dem Hautgesichtsbereichsfarbwert gebildet.

In einem Schritt S6 wird aus den so ermittelten Farbunterschiedswerten ein minimaler Farbunterschiedswert ausgewählt.

Der voreingestellt Weißabgleich des mindestens einen Gesichtsbilds wird nunmehr anhand des bestimmten minimalen Farbunterschiedswert überprüft. Dazu sind verschiede voneinander unabhängige Fallgruppen vorgesehen.

In einem ersten Schritt S7 wird ein Hinweis ausgegeben, einen Weißabgleich an dem mindestens ein Gesichtsbild manuell durchzuführen, wenn der minimale Farbunterschiedswert einen ersten vorgegebenen Farbunterschiedsgrenzwert überschreitet.

In einem Schritt S8 wird der Weißabgleich des mindestens einen Gesichtsbilds angepasst auf Basis eines systematischen Farbfehlerwerts, wenn der minimale Farbunterschiedswert den ersten vorgegebenen Farbunterschiedswert unterschreitet.

In einem Schritt S9 wird ein Bilddatensatz auf Basis des mindesten einen Gesichtsbild mit angepasstem Weißabgleich erzeugt und der Bilddatensatz wird ausgegeben.

In einem Schritt S10 wird, wenn der minimale Farbunterschiedswert einen zweiten vorgegebenen Farbunterschiedsgrenzwert unterschreitet oder diesem entspricht der Bilddatensatz auf Basis des mindestens einen Gesichtsbilds und dessen voreingestellten Weißabgleich erzeugt und ausgegeben.

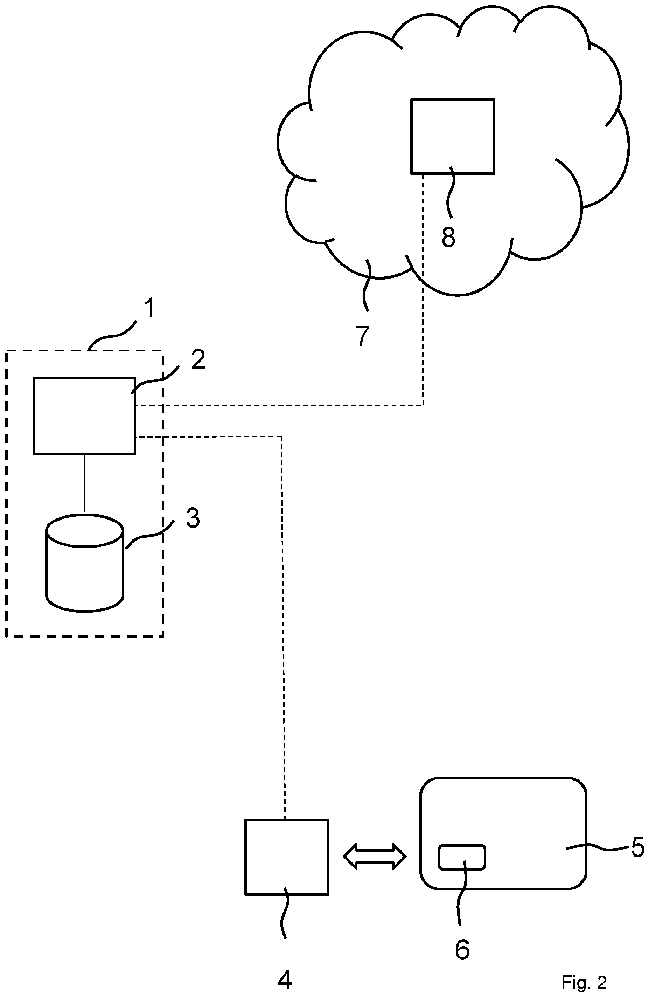

Die Fig. 2 zeigt eine schematische Darstellung einer Anordnung zum Personalisieren eines Sicherheitsdokuments 5 oder zur Authentifikation. Die Anordnung umfasst einen Computer 1. Der Computer 1 kann beispielsweise einen Prozessor 2 umfassen. Mit Hilfe des Prozessors 2 kann ein Bilddatensatz auf Basis des mindestens einen Bilds erzeugt werden. Durch den Prozessor 2 kann der erhaltener Bilddatensatz in einem Speicher 3 zumindest vorübergehend abgelegt werden.

In einer Ausführungsform ist der Prozessor 2 mit einer Personalisierungseinrichtung 4 verbunden, an welche der Bilddatensatz wahlweise übertragen werden kann. Hierbei ist die Personalisierungseinrichtung 4 eingerichtet, ein Sicherheitsdokument 5 zu personalisieren. Hierzu kann die Personalisierungseinrichtung 4 mit einer Druckeinrichtung ausgeführt sein, mittels der ein biometrisches Passbild basierend auf dem Bilddatensatz auf dem Sicherheitsdokument 5 aufgedruckt wird. Alternativ oder ergänzend kann vorgesehen sein, den Bilddatensatz in einer Speichereinrichtung 6 des Sicherheitsdokuments 5 abzulegen. Hierdurch ist das Sicherheitsdokument 5 personalisiert und ermöglicht anhand des biometrischen Passbildes eine Personenidentifizierung.

Die Fig. 2 zeigt weiterhin eine alternative Ausführungsform in der alleine oder in Verbindung mit der Personalisierungseinrichtung 4 eine Verbindung durch den Prozessor 2 zum Internet 7 bereitgestellt ist. Über die Internetverbindung kann der Bilddatensatz zur weiteren Verwendung an einen Server 8 übermittelt werden. Beispielsweise kann der Server 8 Teil eines Netzwerks eines Diensteanbieters sein, welcher den Bilddatensatz für eine biometrische Identifizierung oder Authentifizierung des Nutzers als berechtigter Nutzer einer Dienstleistung verwendet, wobei entsprechende Verfahren zur Nutzung eines ein biometrisches Passbild angebenden Bilddatensatzes dem Fachmann in verschiedenen Ausgestaltungen prinzipiell bekannt sind.

Insbesondere in diesem Zusammenhang, aber auch in anderen Ausgestaltungen, kann der Prozessor 6 mit einem persönlichen elektronischen Gerät des Nutzers gebildet sein, beispielsweise einem Computer, einem Mobiltelefon, einem Tablet-Computer oder ähnlichem, auf dem zum Ausführen des Verfahrens eine entsprechende Softwareanwendung (App) läuft.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Computer
- 2: Prozessor
- 3: Speicher
- 4: Personalisierungseinrichtung
- 5: Sicherheitsdokument
- 6: Speichereinrichtung
- 7: Internet
- 8: Server
- S1...S10: Verfahrensschritte

## Patentansprüche

1. Computer-implementiertes Verfahren zum Überprüfen eines voreingestellten Weißabgleichs von mindestens einem Gesichtsbild,
das Verfahren umfassend:
- Ermitteln eines Hautgesichtsbereichsfarbwerts für einen Hautgesichtsbereich des mindestens einen Gesichtsbilds mit voreingestelltem Weißabgleich;
- Bestimmen von Farbunterschiedswerten des Hautgesichtsbereichsfarbwerts zu Hauttonwerten in einer Hauttontabelle; und
- Überprüfen des voreingestellten Weißabgleichs des mindestens einen Gesichtsbilds anhand eines minimalen Farbunterschiedswerts, wobei das Überprüfen umfasst:
- Ausgeben eines Hinweises einen Weißabgleich manuell durchzuführen, wenn der minimale Farbunterschiedswert einen ersten vorgegebenen Farbunterschiedsgrenzwert überschreitet, oder
- Anpassen des Weißabgleichs auf Basis eines systematischen Farbfehlerwerts wenn der minimale Farbunterschiedswert den ersten vorgegebenen Farbunterschiedswert unterschreitet, oder
- Ausgeben eines Bilddatensatzes auf Basis des mindestens einen Bilds, wenn der minimale Farbunterschiedswert einen zweiten vorgegebenen Farbunterschiedsgrenzwert unterschreitet oder diesem entspricht.

2. Verfahren nach Anspruch 1, **gekennzeichnet durch**:
- Empfangen einer Vielzahl von Gesichtsbildern mit voreingestellten Weißabgleich und unterschiedlichen Helligkeitswerten;
- Bestimmen, in jedem der Vielzahl von Gesichtsbildern, des Hautgesichtsbereichs;
- Ermitteln, in jedem der Vielzahl von Gesichtsbildern, eines Bildparameterwerts für einen Bildparameter in dem Hautgesichtsbereich;
- Bestimmen des mindestens einen Gesichtsbilds aus der Vielzahl von Gesichtsbildern, in dem der ermittelte Bildparameterwert innerhalb eines vorgegebenen Bildparameterwertebereichs liegt.

3. Verfahren nach Anspruch 2, **dadurch gekennzeichnet, dass** der Bildparameter eine Helligkeit oder eine Entropie ist.

4. Verfahren nach einem der vorangegangenen Ansprüche, **dadurch gekennzeichnet, dass** der Farbfehlerwert bestimmt wird durch:
Ermitteln für Gesichtsbildern einer Vielzahl von Personen jeweils eines minimalen Farbunterschiedswerts des Hautgesichtsbereichsfarbwerts in dem entsprechenden Gesichtsbild zu den Hauttonwerten in der Hauttontabelle;
Bestimmen des systematischen Farbfehlerwerts aus den minimalen Farbunterschiedswerten der Gesichtsbilder der Vielzahl von Personen.

5. Verfahren nach einem der vorangegangenen Ansprüche, **dadurch gekennzeichnet, dass** der zweite Farbunterschiedsgrenzwert niedriger ist als der erste Farbunterschiedsgrenzwert.

6. Verfahren nach einem der vorangegangenen Ansprüche, **dadurch gekennzeichnet, dass** der Hautgesichtsbereichsfarbwert ermittelt wird durch Bestimmen von mehreren Farbwerten in dem Hautgesichtsbereich und durch Bilden eines Mittelwerts aus den mehreren Farbwerten.

7. Verfahren nach einen der Ansprüche 1 bis 5, **dadurch gekennzeichnet, dass** der mindestens eine Hautgesichtsbereichsfarbwert ermittelt wird durch Bestimmen von mehreren Farbwerten in dem Hautgesichtsbereich und durch Auswählen des in den bestimmten mehreren Farbwerten am häufigsten auftretenden Farbwerts.

8. Verfahren nach einem der vorangegangenen Ansprüche **dadurch gekennzeichnet, dass** der Hausgesichtsbereich über Landmarks des Gesichts in dem Gesichtsbild ermittelt wird.

9. Verfahren nach einem der vorangegangenen Ansprüche, **gekennzeichnet durch** Ansteuern einer Bildaufnahmeeinrichtung und einer Beleuchtungseinrichtung, sodass die Bildaufnahmeeinrichtung eine Vielzahl von Bildern aufnimmt und die Beleuchtungseinrichtung eine Helligkeit erhöht, bis durch den Computer bestimmt wird, dass der Bildparameterwert innerhalb des vorgegebenen Bereichs liegt.

10. Vorrichtung, insbesondere ein Computer, eingerichtet und ausgelegt, das Verfahren nach einem der Ansprüche 1 bis 9 durchzuführen.

11. Computerprogrammprodukt umfassend Befehle, die bei der Ausführung durch eine Datenverarbeitungsvorrichtung, insbesondere die Vorrichtung nach Anspruch 10, diese veranlassen, die Verfahrensschritte nach mindestens einem der Ansprüche 1 bis 9 auszuführen.

12. System zum Überprüfen eines voreingestellten Weißabgleichs mindestens eines Gesichtsbilds, das System umfassend:
- eine Vorrichtung nach Anspruch 10;
- eine mit der Vorrichtung verbundene Bildaufnahmeeinrichtung eingerichtet, mindestens ein Gesichtsbild aufzunehmen.

13. System nach Anspruch 12, **gekennzeichnet durch** eine mit der Vorrichtung verbundene Beleuchtungseinrichtung, wobei die Bildaufnahmeeinrichtung und die Beleuchtungseinrichtung eingerichtet sind, eine Vielzahl von Gesichtsbildern aufzunehmen, während die Helligkeit durch die Beleuchtungseinrichtung erhöht wird.
